(19) Europäisches Patentamt
European Patent Office
Office européen des brevets

(11) Publication number: **0 248 094 B1**

# EUROPEAN PATENT SPECIFICATION

(45) Date of publication of patent specification: **14.08.91**  (51) Int. Cl.⁵: **B21D 51/26, B21D 24/00**

(21) Application number: **86107296.5**

(22) Date of filing: **28.05.86**

(54) Apparatus for supporting a body for reciprocal movement.

(43) Date of publication of application:
**09.12.87 Bulletin 87/50**

(45) Publication of the grant of the patent:
**14.08.91 Bulletin 91/33**

(84) Designated Contracting States:
**BE DE GB IT NL SE**

(56) References cited:
**DE-A- 629 531**    **GB-A- 2 112 307**
**US-A- 3 314 274**   **US-A- 3 635 069**
**US-A- 3 696 657**   **US-A- 3 702 559**

(73) Proprietor: **BALL CORPORATION**
**345 South High Street**
**Muncie Indiana 47302(US)**

(72) Inventor: **Straw, David Allen**
**124 Nielson Avenue**
**Gridley California 95948(US)**

(74) Representative: **Kraus, Walter, Dr. et al**
**Patentanwälte Kraus, Weisert & Partner**
**Thomas-Wimmer-Ring 15**
**W-8000 München 22(DE)**

## Description

The invention relates to a machine for forming can bodies, said machine comprising a ram supported by a frame for reciprocal movement along a horizontal path, said ram being provided with support surfaces, said surfaces being circumferentially spaced apart from each other.

A machine of this type for forming can bodies is disclosed in US-A-3 696 657.

There are many different processes and machines which utilize a body that is reciprocated back and forth to perform work. There have always been problems in supporting such a reciprocating body, particularly when the reciprocation is in a horizontal direction. This problem exists in some of the machines used to form can bodies, which utilize a ram that is reciprocated back and forth.

A typical method manufacturing two piece cans consists of making a circular blank and then drawing the blank to form a shallow cup. The cup is fed in position ahead of a punch attached to the ram, and then is formed by the ram through a redraw die and a plurality of ironing dies located in a tool pack housing.

Presses for directing the movement of the ram may be either mechanical or hydraulic. Exemplary of mechanical type machines are the machines described in US-A-3 696 675 as mentioned above and entitled "Metal Working Crank and Slide Press Mechanism" as well as in US-A-3 702 559 entitled "Can Body Making Machine".

The can body making machine according to US-A-3 702 559 is constructed such that the ram slides on guides with an attached cam follower cooperating with cam grooves on a barrel cam. The barrel cam is mounted on a shaft driven by an electric motor.

In the machine according to US-A-3 696 675 the ram is mounted on a carriage, and the support surfaces mentioned in the beginning are cylindrical surfaces of wheels which are mounted in the carriage and which run on the top and bottom surfaces of hardened way strips. The wheels can be adjusted with a predetermined amount of preload to avoid slack in the wheels. The carriage is driven by a crank and connecting rod attached to a parallel motion assembly.

Typically, such mechanically driven rams can be driven at high speeds but do not always provide uniform punch speed or travel in a straight line motion, which is critical to continuously producing uniform can walls.

The machines according to US-A-3 696 657 and US-A-3 702 559 utilize heavy carriages. But the movement of a heavy carriage upon which the ram rides inherently requires a significant amount of service time. Wear items such as bearings and cam followers must constantly be replaced. When such items are replaced, the complete ram system must be calibrated and each wheel individually loaded. Regrinding the hardended way strips also contributes to significant "down time". Reducing "down time" and increasing efficiency is significant in light of the fact that can body making machines typically run 24 hours per day and can produce as many as hundred of cans per minute.

It is an object of this invention to provide a machine for forming can bodies which supports a ram while permitting reciprocal movement of the ram in a horizontal direction.

It is another object of this invention to provide a machine for forming can bodies which supports a ram while permitting reciprocal movement of the ram at rates of hundreds of times a minute in a horizontal direction with a minimum of ram rotation and deviation from a straight line motion.

It is a further object of this invention to provide a machine for forming can bodies,which supports a ram while permitting reciprocal movement of the ram at rates of hundreds of times per minute in a horizontal direction utilizing the weight of the ram to maintain the ram in contact with the support.

It is a further object of this invention to provide a machine for forming can bodies,which supports a ram while permitting reciprocal movement of the ram at rates of hundreds of times per minute in a horizontal direction utilizing the weight of the ram to maintain the ram in contact with the support and to damp vibrations caused by the change in direction of movement of the ram and/or the work performed by the ram.

The foregoing objects are accomplished by this invention by providing a machine of the type mentioned in the beginning for forming can bodies, which machine is characterized in that said support surfaces comprise at least two planar surfaces extending in a direction parallel to the longitudinal axis of said ram, a ram cradle assembly is provided comprising at least two supporting means spaced apart in the longitudinal direction of the ram, each supporting means comprising roller means mounted to said frame, said roller means being in contact with each of said spaced apart planar surfaces, each roller means being mounted for rotation, damping means are affixed to the frame and in contact with the outer surface of said ram during its reciprocal movement along the horizontal path, said damping means being positioned between said roller means and the end of said ram to which can forming apparatus is attached; at least one freely rotable roller secured to the frame and having a generally cylindrical outer surface, a third planar surface on said ram extending in a direction parallel to said longitudinal axis, and means for ensuring contact pressure between said freely rotable roller and said third planar surface, thereby providing constant pressure between the ram and the roller means during the reciprocal movement of said ram.

Thus the invention provides means for supporting a reciprocal ram used in a machine for forming can bodies. The invention also provides means for damping vibrations so as to limit damage to the apparatus normally resulting from such vibrations. Also, by minimizing vibrations, the can making efficiency is increased.

In the preferred embodiment of the invention, the ram has an outer surface shaped to cooperate with angularly related surfaces on the ram cradle assembly. The ram cradle assembly comprises at least two supporting means wherein each supporting means comprises two angularly related rollers having generally cylindrical surfaces. The ram is provided with two angularly related planar surfaces extending in a direction generally parallel to the longitudinal axis of the ram. The angular relationship of the planar surfaces is the same as the angular relationship of the rollers so that the ram may be supported by the ram cradle assembly with the planar surfaces on the ram in contact with the cylindrical surfaces of the rollers. The weight of the ram is generally sufficient to ensure that the ram remains in contact with the rollers. However, additional means are provided to apply a force urging the ram into firmer contact with the rollers. This force applying means comprises at least two spaced apart rollers, each of which has a generally cylindrical surface. The ram is provided with another planar surface extending in a direction generally parallel to the longitudinal axis of the ram and located so that it will be contacted by the force applying rollers. Any means, such as a spring, may be used to apply the force to the force applying rollers.

The damping means, in the preferred embodiment of the invention, comprises a rope packing that is supported on the ram cradle assembly and is in circumferential contact with the adjacent portions of the outer surface of the ram. The preferred rope packing comprises Teflon (trademark of E. I. DuPont) coated cotton or fiberglass rope.

The following preferred embodiments are illustrated in the accompanying drawings in which like reference characters refer to the same parts throughout the various views. The drawings are not necessarily to scale, emphasis instead being placed upon illustrating the principles of the invention:

Fig. 1    is a top plan view of a machine of this invention; and

Fig. 2    is an end elevation of a machine of this invention.

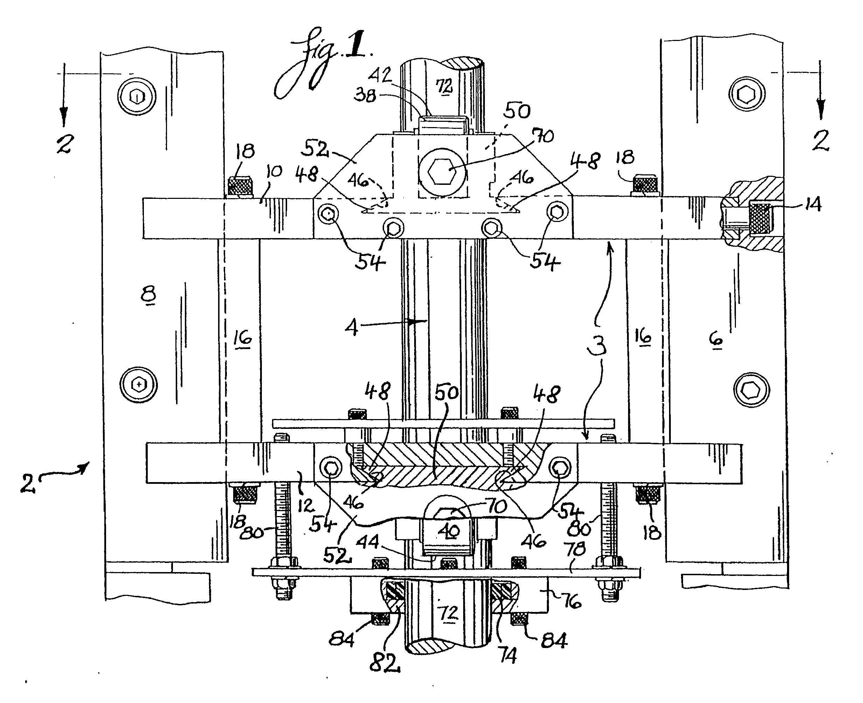

In Fig. 1, there is illustrated a ram cradle assembly 2 which, in the preferred embodiment of the invention, is mounted on the frame 3. The end portion (not shown) of the ram 4 extending beyond roller 38 in Fig. 1 is connected to means for imparting straight line reciprocating motion.

The end portion (not shown) of the ram 4 extending beyond roller 40 in Fig. 1 is connected to means for forming cans. While the preferred embodiment is illustrated for use in a machine for forming can bodies, the concepts of this invention may also be used with any mechanism wherein a body needs to be supported so that the body can be reciprocated in a horizontal direction at various rates of reciprocation, such as hundreds of times per minute.

The ram cradle assembly 2 comprises support plates 10 and 12 which extend between rails 6 and 8 and are secured to each rail 6, 8 by suitable means such as the threaded bolts 14. A plurality of spacer blocks 16 extend between the support plates 10 and 12 and are secured in place by threaded bolts 18.

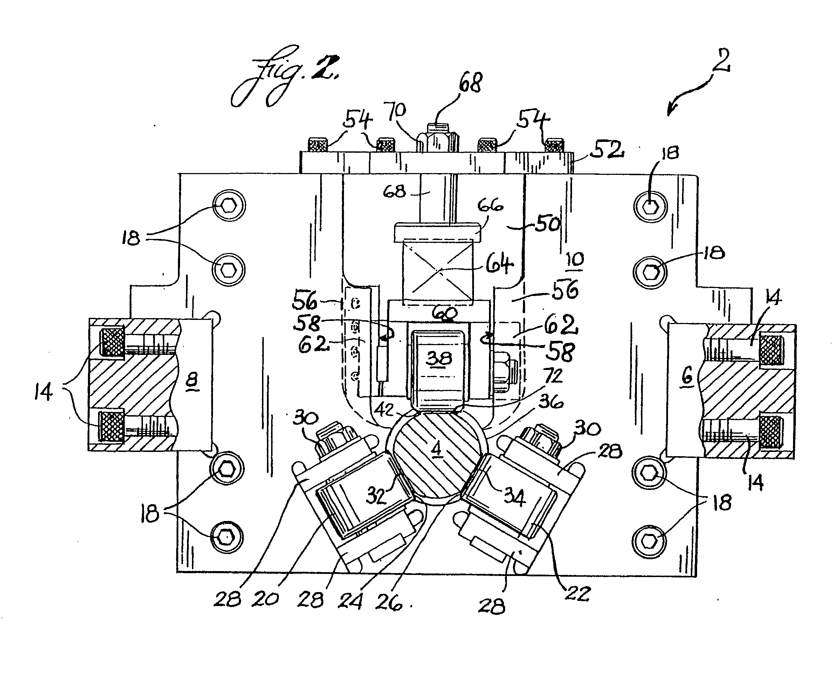

As shown in Fig. 2, a pair of freely rotatable support rollers 20 and 22 having angularly related generally cylindrical surfaces 24 and 26 are mounted in recesses in each of the plates 10 and 12 and secured thereto by suitable means such as bolts (not shown). As illustrated in Fig. 2, the rollers 20 and 22 are mounted between a pair of spaced apart lugs 28 and held in position by nuts 30. The ram 4 is provided with two angularly related planar surfaces 32 and 34, each of which extends in a direction generally parallel to the longitudinal axis of the ram 4. An opening 36 is provided in each of the plates 10 and 12 to provide for the passage of the ram 4 through the plates 10 and 12. The ram 4 is supported on the rollers 20 and 22 so that the planar surface 32 is in contact with and supported by generally cylindrical surface 24 and the planar surface 34 is in contact with and supported by generally cylindrical surface 26. The weight of the ram 4 cooperates with the anular relationship of the planar surfaces 32 and 34 and the angular relationship of the generally cylindrical surfaces 24 and 26 to retain the longitudinal axis to the ram 4 from movement in any direction perpendicular to the longitudinal axis during the reciprocal movement of the ram 4. Although only two rollers 20, 22 and two planar surfaces 32, 34 are illustrated in Fig. 2, it is to be understood that more than two rollers and two planar surfaces may be used. In all instances, the angular relationship of the planar surfaces 32, 34 corresponds to the angular relationship of the generally cylindrical surfaces 24, 26 of the rollers 20, 22.

As stated above, the weight of the ram 4 is sufficient to hold it in position during the reciprocal movement. However, it is highly desirable that there be no sliding movement between the planar surfaces 32, 34 on the ram 4 and the generally cylindrical surfaces 24, 26 on the rollers 20 and 22. This is particularly so at the end of the reciprocal movement in the one direction and the start of the movement in the opposite direction.

Therefore, means are provided to ensure a relative rolling relationship between the planar surfaces 32, 34 on the ram 4 and the generally cylindrical surfaces 24, 26 on the rollers 20, 22. The preferred embodiment for accomplishing this rolling relationship is illustrated in Figs. 1 and 2 and comprises rollers 38 and 40 having generally cylindrical surfaces 42 and 44 and mounted on the plates 10 and 12. The mounting means for ensuring proper function of each of rollers 38 and 40 comprises a dovetailed recess 46 in each of the plates 10 and 12 and a corresponding dovetailed projection 48 on a support member 50 which depends from a plate member 52 which is secured to each plate 10 and 12 by threaded bolts 54. The support member 50 has two spaced apart projecting portions 56 each of which is provided with a vertically extending recess 58. The rollers 38 and 40 are mounted in bearing blocks 60 which have projection portions 62 mounted for sliding movement in the recesses 58. The relationship between the bearing blocks 60 and the recesses 58 is such so as to allow movement of the bearing blocks 60 in a vertical direction but to prevent relative movement in a horizontal direction. The upper portion of the bearing block 60 is attached to the lower portion of a spring 64. The upper portion of the spring 64 is attached to a plate 66, having a threaded member 68 projecting therefrom and extending through an opening in the plate member 52. A nut 70 is threaded on the member 68 so that the tension of the spring 64 may be adjusted. The ram 4 is provided with a planar surface 72 and, as illustrated in Fig. 2, is in contact with the generally cylindrical surfaces 42 and 44 of the rollers 38 and 40. The springs 64 function to maintain the rollers 38 and 40 in contact with the planar surface 72 and to apply an additional force in the ram 4 to ensure the desired rolling relationship between the planar surfaces and the generally cylindrical surfaces. The amount of force applied by rollers 38 and 40 is controlled by adjustment of the springs 64.

In the preferred embodiment of the invention, the ram 4 is reciprocated at rates of hundreds of times per minute. In order to minimize vibrations, damping means are provided. In the preferred embodiment, the damping means comprise a rope packing 74 in contact with the outer surface of the ram 4. The rope packing 74 is mounted in a holder 76 secured to a plate 78 mounted in spaced relationship to the plate 12 by spacing means 80. A packing push plate 82 is mounted on the holder 76 by threaded bolts 84. The rope packing 74 is a conventional half and half rope packing formed from Teflon coated cotton or fiberglass (Teflon is a trademark of E. I. DuPont).

## Claims

1. A machine for forming can bodies, said machine comprising a ram (4) supported by a frame (3) for reciprocal movement along a horizontal path, said ram (4) being provided with support surfaces (32,34), said surfaces (32,34) being circumferentially spaced apart from each other, **characterized** in that said support surfaces (32,34) comprise at least two planar surfaces (32,34) extending in a direction parallel to the longitudinal axis of said ram (4), a ram cradle assembly (2) is provided comprising at least two supporting means (10,12) spaced apart in the longitudinal direction of the ram (4), each supporting means (10,12) comprising roller means (20,22) mounted to said frame (3), said roller means (20,22) being in contact with each of said spaced apart planar surfaces (32,34), each roller means (20,22) being mounted for rotation, damping means (74) are affixed to the frame (3) and in contact with the outer surface of said ram (4) during its reciprocal movement along the horizontal path, said damping means (74) being positioned between said roller means (20,22) and the end of said ram (4) to which can forming apparatus is attached; at least one freely rotable roller (38,40) secured to the frame (3) and having a generally cylindrical outer surface (42,44), a third planar surface (72) in said ram (4) extending in a direction parallel to said longitudinal axis, and means (60,64,66,68) for ensuring contact pressure between said freely rotable roller (38,40) and said third planar surface (72), thereby providing contact pressure between the ram (4) and the roller means (20,22) during the reciprocal movement of said ram (4).

2. An apparatus according to claim 1 **characterized** in that the damping means (74) includes a rope packing mounted within a holder means (76) for contact with the outer surface of said ram (4).

3. An apparatus according to claim 1, **characterized** in that the means (60,64,66,68) for urging said one freely rotable roller (38,40) includes spring means (64) for applying a force to said roller (38,40) to thereby urge said roller (38,40) against said third planar surface (72).

**Revendications**

1. Machine pour le formage de corps de boîte, cette machine comprenant un piston ou plongeur (4) supporté par un châssis (3) en vue d'un mouvement alternatif le long d'un parcours horizontal, ce piston (4) comportant des surfaces de support (32, 34), ces surfaces (32, 34) étant à l'écart l'une de l'autre suivant la circonférence, caractérisée en ce que les surfaces de support susdites (32, 34) sont constituées par au moins deux surfaces planes (32, 34) s'étendant dans une direction parallèle à l'axe longitudinal de ce piston (4), un ensemble (2) formant berceau de piston est prévu, cet ensemble comportant au moins deux moyens de support (10, 12) espacés l'un de l'autre dans la direction longitudinale du piston (4), chaque moyen de support (10, 12) comportant des moyens en forme de cylindre (20, 22) montés sur le châssis (3), ces moyens en forme de cylindre (20, 22) étant en contact avec chacune des surfaces planes espacées susdites (32, 34), chaque moyen en forme de cylindre (20, 22) étant monté à rotation, des moyens amortisseurs (74) sont fixés au châssis (3) et en contact avec la surface extérieure du piston susdit (4) durant son mouvement alternatif le long du parcours horizontal, ces moyens amortisseurs (74) étant disposés entre les moyens en forme de cylindre (20, 22) et l'extrémité du piston (4) à laquelle un appareil de formage de boîtes est attaché, au moins un cylindre à rotation libre (38, 40) étant fixé au châssis (3) et présentant une surface extérieure d'allure générale cylindrique (42, 44), une troisième surface plane (72) du piston (4) s'étendant dans une direction parallèle à l'axe longitudinal susdit, et des moyens (60, 64, 66, 68) étant prévus pour assurer une pression de contact entre le cylindre à rotation libre (38, 40) et la troisième surface plane susdite (72), de manière à assurer de la sorte une pression de contact entre le piston (4) et les moyens en forme de cylindre (20, 22) durant le mouvement alternatif de ce piston (4).

2. Appareil suivant la revendication 1, caractérisé en ce que les moyens amortisseurs (74) comprennent un bourrage à cordon, monté dans un moyen de support (76) en vue de son contact avec la surface extérieure du piston (4).

3. Appareil suivant la revendication 1, caractérisé en ce que les moyens (60, 64, 66, 68) destinés à pousser le cylindre à rotation libre (38, 40) comprennent un dispositif (64) destiné à appliquer une force à ce cylindre (38, 40) pour pousser ainsi ce dernier contre la troisième surface plane précitée (72).

**Patentansprüche**

1. Maschine zum Formen von Dosenkörpern, wobei die Mschine einen Stempel (4) umfaßt, der mittels eines Rahmens (3) zur Hin- und Herbewegung längs eines horizontalen Wegs gehaltert ist, wobei der Stempel (4) mit Auflageflächen (32, 34) versehen ist, welche Flächen (32, 34) umfangsmäßig im Abstand voneinander angeordnet sind, dadurch **gekennzeichnet**, daß die Auflageflächen (32, 34) wenigstens zwei planare Oberflächen (32, 34) umfassen, die sich in einer Richtung parallel zu der Längsachse des Stempels (4) erstrecken, wobei eine Stempellagerstuhlanordnung (2) vorgesehen ist, die wenigstens zwei Halteeinrichtungen (10, 12) umfaßt, welche in der Längsrichtung des Stempels (4) im Abstand voneinander angeordnet sind, wobei jede Halteeinrichtung (10, 12) eine Rolleneinrichtung (20, 22) umfaßt, die an dem Rahmen (3) angebracht ist, wobei die Rolleneinrichtung (20, 22) in Kontakt mit jeder der im Abstand voneinander angeordneten planaren Oberflächen (32, 34) ist, wobei jede Rolleneinrichtung (20, 22) zur Drehung angebracht ist, wobei eine Dämpfungseinrichtung (74) an dem Rahmen (3) befestigt und in Kontakt mit der äußeren Oberfläche des Stempels (4) während dessen Hin- und Herbewegung längs des horizontalen Wegs ist, wobei die Dämpfungseinrichtung (74) zwischen der Rolleneinrichtung (20, 22) und dem Ende des Stempels (4), an welchem die Dosenformungseinrichtung angebracht ist, positioniert ist; wobei wenigstens eine frei drehbare Rolle (38, 40) an dem Rahmen (3) befestigt ist und eine generell zylindrische äußere Oberfläche (42, 44) hat, wobei sich eine dritte planare Oberfläche (72) in dem Stempel (4) in einer Richtung parallel zu der Längsachse erstreckt, und wobei eine Einrichtung (60, 64, 66, 68) zum Sicherstellen eines Kontaktdrucks zwischen der frei drehbaren Rolle (38, 40) und der dritten planaren Oberfläche (72) vorgesehen ist, so daß dadurch ein Kontaktdruck zwischen dem Stempel (4) und der Rolleneinrichtung (20, 22) während der Hin- und Herbewegung des Stempels (4) vorgesehen wird.

2. Einrichtung nach Anspruch 1, dadurch **gekennzeichnet**, daß die Dämpfungseinrichtung (74) eine Seilpackung umfaßt, die innerhalb einer Halteeinrichtung (76) zum Kontakt mit der äußeren Oberfläche des Stempels (4) angebracht ist.

3. Einrichtung nach Anspruch 1, dadurch **gekennzeichnet**, daß die Einrichtung (60, 64, 66, 68) zum Drängen der einen frei drehbaren Rolle (38, 40) eine Federeinrichtung (64) zum Anwenden einer Kraft auf die Rolle (38, 40), so daß dadurch die Rolle (38, 40) gegen die dritte planare Oberfläche (72) gedrängt wird, umfaßt.

Fig. 1

Fig. 2